# EUROPÄISCHE PATENTANMELDUNG

(11) **EP 2 068 495 A1**
(43) Veröffentlichungstag der Anmeldung: **10.06.2009**
(21) Anmeldenummer: 08018276.9
(22) Anmeldetag: 18.10.2008
(51) Int. Cl.: H04L 12/24

(54) **Offline-Konfiguration von Switchen**

(30) Priorität: 05.12.2007 DE 102007058631
(71) Anmelder: Hirschmann Automation and Control GmbH, 72654 Neckartenzlingen (DE)
(72) Erfinder: Reister, Klaus, 73265 Dettingen/Teck (DE); Schmid, Jürgen, 88529 Zwiefalten (DE)
(74) Vertreter: Greif, Thomas

(57) **Zusammenfassung**

Die Erfindung betrifft ein Verfahren zur Konfiguration eines Netzwerkinfrastrukturgerätes, wobei Konfigurationsdaten des Netzwerkinfrastrukturgerätes für den Betrieb des Netzwerkinfrastrukturgerätes innerhalb einer Netzwerkinfrastruktur bereitgestellt und in das Netzwerkinfrastrukturgerät übertragen werden, das dadurch gekennzeichnet ist, dass die Konfigurationsdaten anwendungs- und anwenderspezifische Daten sind, die ohne eine Datenverbindung zu dem Netzwerkinfrastrukturgerät bereitgestellt, abgespeichert und erst dann in das Netzwerkinfrastrukturgerät geladen werden.

## Beschreibung

Die Erfindung betrifft ein Verfahren zur Konfiguration eines Netzwerkinfrastrukturgerätes gemäss den Merkmalen des Oberbegriffes des Patentanspruchs 1.

Netzwerkinfrastrukturen sind grundsätzlich bekannt. Neben Datenleitungen, die die einzelnen Netzwerkinfrastrukturgeräte miteinander verbinden, sind neben diesen Netzwerkinfrastrukturgeräten, die für den eigentlichen Betrieb des Netzwerkes zuständig sind, auch Endgeräte (Clients, wie Personal Computer und dergleichen) innerhalb der Netzwerkinfrastruktur angeordnet.

Es ist erforderlich, dass die Netzwerkinfrastrukturgeräte (wie z. B. Switche und Router) konfiguriert werden müssen, damit ein Betrieb innerhalb der Netzwerkinfrastruktur möglich ist.

Für die Konfiguration ist es Stand der Technik, dass das Netzwerkinfrastrukturgerät, wie beispielsweise der Switch, an einen PC (beispielsweise über CLI [Command Line Interface] oder ein Web-Interface) angeschlossen wird. Dadurch ist eine Online-Konfiguration zwar grundsätzlich möglich, aber erst dann, nachdem die gesamte Netzwerkinfrastruktur oder auch Teile davon aufgebaut und die Geräte der Netzwerkinfrastruktur in Betrieb genommen worden sind. Dies kann bei größeren Netzwerkinfrastrukturen (wie z. B. in Produktionshallen oder bei verfahrenstechnischen Anlagen) oder bei weit auseinander angeordneten Netzwerkinfrastrukturgeräten äußerst aufwändig sein, um eine Online-Konfiguration durchzuführen. Außerdem ist es von Nachteil, dass eine solche Online-Konfiguration zeitlich sehr aufwändig ist, da zunächst die Netzwerkinfrastrukturgeräte physikalisch vorhanden sein müssen, danach das Netzwerk aufgebaut wird und wiederum danach nacheinander die einzelnen Netzwerkinfrastrukturgeräte konfiguriert werden müssen. Das heißt, dass erst das Netzwerk aufgebaut und dann die einzelnen Netzwerkinfrastrukturgeräte konfiguriert werden müssen, wobei sich die Inbetriebnahme der gesamten Netzwerkinfrastruktur in nachteiliger Weise verzögert.

Der Erfindung liegt daher die Aufgabe zugrunde, ein Verfahren zur Konfiguration eines Netzwerkinfrastrukturgerätes bereitzustellen, mit dem die eingangs geschilderten Nachteile beseitigt werden. Insbesondere soll ein schneller Aufbau und eine rasche Inbetriebnahme der Netzwerkinfrastruktur realisiert werden.

Diese Aufgabe ist durch die Merkmale des Patentanspruchs 1 gelöst.

Erfindungsgemäss ist vorgesehen, dass die Konfigurationsdaten anwendungsspezifische Daten sind und ohne Datenverbindung zu dem Netzwerkinfrastrukturgerät bereitgestellt, abgespeichert und erst danach in das Netzwerkinfrastrukturgerät geladen werden. Damit lässt sich die Aufgabe wie folgt lösen: Bei Netzwerkinfrastrukturen, beispielsweise für verfahrenstechnische Anlagen, für Automatisierungsanlagen in Herstellung und Produktion und dergleichen wird die Netzwerkinfrastruktur (Topologie) schon vor der Realisierung und Inbetriebnahme des Netzwerkes geplant. Dabei ist bekannt, welche Geräte (sowohl Netzwerkinfrastrukturgeräte als auch Endgeräte) an welchen Ort installiert werden, mit welcher Adresse sie versehen werden (um sie anzusprechen) und welche sonstigen Eigenschaften sie beim späteren Betrieb innerhalb des Netzwerkes haben sollen. Da diese Daten grundsätzlich schon bekannt sind, handelt es sich bei den Konfigurationsdaten, die für den Betrieb des Netzwerkinfrastrukturgerätes in dem gesamten Netzwerk erforderlich sind, um anwendungsspezifische Daten, die in einer Konfigurationsdatei bereitgestellt und abgespeichert werden können, ohne dass zunächst das gesamte Netzwerk aufgebaut und das Netzwerkinfrastrukturgerät installiert sein muss. Somit ist es also gemäss der Erfindung möglich, vor Inbetriebnahme des Netzwerkes die anwendungs- und anwenderspezifischen Daten bereitzustellen und in einer Konfigurationsdatei abzuspeichern, ohne dass eine Datenverbindung zu dem Netzwerkinfrastrukturgerät bestehen muss. Dadurch wird es möglich, für jedes Netzwerkinfrastrukturgerät der anwendungsabhängigen Netzwerkinfrastruktur für jedes dort eingesetzte Netzwerkinfrastrukturgerät eine Konfigurationsdatei bereitzustellen und abzuspeichern. Kommt es nun zu dem Aufbau der Netzwerkinfrastruktur, werden die bereitgestellten Netzwerkinfrastrukturgeräte mit den entsprechend vorbereiteten Konfigurationsdaten, die anwender- und anwendungsspezifisch sind, versehen, bevor oder nachdem das Netzwerkinfrastrukturgerät in die Netzwerkinfrastruktur eingebaut wurde. Dadurch handelt es sich um eine sogenannte Offline-Konfiguration der Netzwerkinfrastrukturgeräte, wie Switche oder Router, so dass diese sofort nach ihrem Einbau in die Netzwerkinfrastruktur in Betrieb genommen werden können, wenn die Konfigurationsdaten in das Netzwerkinfrastrukturgerät geladen worden sind, bevor es in die Netzwerkinfrastruktur eingebaut wurde. Aber auch für den Fall, dass nach seinem Einbau in die Netzwerkinfrastruktur das Netzwerkinfrastrukturgerät erst mit den bereitgestellten und gespeicherten Konfigurationsdaten versehen werden muss, geht die Inbetriebnahme des Netzwerkes wesentlich schneller vonstatten, als dies bei einer Konfiguration über CLI oder ein Web-Interface möglich wäre.

In Weiterbildung der Erfindung ist vorgesehen, dass die Konfigurationsdaten in einem Speichermedium, z. B. einem sogenannten Autokonfigurationsadapter, der vorzugsweise als USB-Stick ausgebildet ist, zwischengespeichert werden und, nachdem das Speichermedium mit dem jeweiligen Netzwerkinfrastrukturgerät verbunden wurde, in ein entsprechendes Speichermedium des Netzwerkinfrastrukturgerätes geladen werden. Dies hat den Vorteil, dass für diesen Vorgang die Netzwerkinfrastrukturgeräte nicht an das Netzwerk angeschlossen sein müssen, so dass eine Konfiguration ohne Netzwerkanschluss möglich ist.

Der wesentlichste Vorteil der Erfindung ist darin zu sehen, dass die für den Einbau in eine Netzwerkinfrastruktur vorbereiteten Netzwerkinfrastrukturgeräte schon mit den Konfigurationsdaten (Offline) versehen werden und sie dadurch nach Einbau in die Netzwerkinfrastruktur sofort in Betrieb genommen werden können. Dadurch lässt sich der Aufbau und die Inbetriebnahme eines anwender- und anwendungsspezifischen Netzwerkes wesentlich einfacher, individueller und schneller vollziehen.

## Patentansprüche

1. Verfahren zur Konfiguration eines Netzwerkinfrastrukturgerätes, wobei Konfigurationsdaten des Netzwerkinfrastrukturgerätes für den Betrieb des Netzwerkinfrastrukturgerätes innerhalb einer Netzwerkinfrastruktur bereitgestellt und in das Netzwerkinfrastrukturgerät übertragen werden, **dadurch gekennzeichnet, dass** die Konfigurationsdaten anwendungs- und anwenderspezifische Daten sind, die ohne eine Datenverbindung zu dem Netzwerkinfrastrukturgerät bereitgestellt, abgespeichert und erst dann in das Netzwerkinfrastrukturgerät geladen werden.

2. Verfahren nach Anspruch 1**, dadurch gekennzeichnet, dass** die Konfigurationsdaten erst in das Netzwerkinfrastrukturgerät geladen werden, nachdem es in die Netzwerkinfrastruktur eingebaut wurde.

3. Verfahren nach einem der vorhergehenden Ansprüche, **dadurch gekennzeichnet, dass** die Konfigurationsdaten in einen Switch oder einen Router als Netzwerkinfrastrukturgerät geladen werden.

4. Verfahren nach einem der vorhergehenden Ansprüche, **dadurch gekennzeichnet, dass** die Konfigurationsdaten in einem Speichermedium zwischengespeichert werden und, nachdem das Speichermedium mit dem jeweiligen Netzwerkinfrastrukturgerät verbunden wurde, in ein entsprechendes Speichermedium des Netzwerkinfrastrukturgerätes geladen werden.
